# EUROPEAN PATENT APPLICATION

(11) **EP 4 429 199 A1**
(43) Date of publication of application: **11.09.2024**
(21) Application number: 22913847.4
(22) Date of filing: 14.11.2022
(51) Int. Cl.: H04L 67/06

(54) **MEDIA FILE TRANSMISSION METHOD AND DEVICE**

(30) Priority: 31.12.2021 CN 202111679593
(71) Applicant: Hisilicon (Shanghai) Technologies Co., Limited, Shanghai 201721 (CN)
(72) Inventor: CHEN, Xiandong, Shanghai 201718 (CN)
(74) Representative: Gill Jennings & Every LLP
(86) International application number: PCT/CN2022/131776
(87) International publication number: WO 2023/124587

(57) **Abstract**

Embodiments of this application relate to the field of chip technologies, and provide a media file transmission method and a device, to reduce power consumption and a delay caused when a transmitter transmits a media file via Bluetooth, and improve playing effect and user experience of a receiver without transcoding. A specific solution is as follows: A transmitter performs Bluetooth capability negotiation with a receiver, to determine that both the transmitter and the receiver support an adaptive coding protocol, where the adaptive coding protocol is used by the transmitter to send media files in different codec formats to the receiver via Bluetooth. The transmitter determines at least one codec format that is of a media file and that is supported by the receiver; and establishes an A2DP Bluetooth connection. The transmitter determines a first codec format of a to-be-sent first media file, and when the receiver supports the first codec format, the transmitter sends the first media file to the receiver, where media data in the first media file includes a first indication, and the first indication indicates the first codec format. Embodiments of this application are used in a process of transmitting data via Bluetooth.

## Description

This application claims priority to Chinese Patent Application No. 202111679593.5, filed with the China National Intellectual Property Administration on December 31, 2021 and entitled "MEDIA FILE TRANSMISSION METHOD AND DEVICE", which is incorporated herein by reference in its entirety.

### TECHNICAL FIELD

Embodiments of this application relate to the field of chip technologies, and in particular, to a media file transmission method and a device.

### BACKGROUND

In an audio transmission protocol used by a transmitter to transmit audio data to a receiver via Bluetooth, when the audio data is played according to the advanced audio distribution profile (Advanced Audio Distribution Profile, A2DP), the transmitter supports a plurality of codec formats such as moving picture experts group audio layer III (Moving Picture Experts Group Audio Layer III, mp3), advanced audio coding (Advanced Audio Coding, AAC), M4A (MPEG-4), and opus. At the receiver, Bluetooth codec formats usually include private formats such as sub-band coding (Sub-band coding, SBC), AAC, and vendor.

Before sending the audio data to the receiver, the transmitter needs to negotiate with the receiver to obtain a fixed codec format, and the transmitter needs to decode the audio data, and then encode the audio data in a codec format obtained through negotiation via Bluetooth and send the audio data in the codec format to the receiver. For example, the transmitter may support four codec formats: mp3, AAC, M4A, and opus; the receiver also supports four codec formats: mp3, AAC, M4A, and opus because the receiver supports online and local playing; and a codec format obtained by the transmitter and the receiver via Bluetooth is SBC. When a codec format of audio data to be played by the transmitter is mp3, the transmitter needs to decode the audio data in the mp3 format, then encode decoded data in the SBC format to obtain audio data whose codec format is SBC, and output the audio data whose codec format is SBC to the receiver; and the receiver plays the audio data whose codec format is SBC.

However, at the transmitter, in such a manner of transcoding audio, that is, decoding and then encoding the audio, power consumption of the transmitter is high, and a delay of sending audio data is high. In addition, sound quality transcoding of performing decoding and then encoding may impair sound quality, thereby affecting playing effect and user experience of the receiver.

### SUMMARY

Embodiments of this application provide a media file transmission method and a device, to reduce power consumption and a delay caused when a transmitter transmits a media file via Bluetooth, and improve playing effect and user experience of a receiver without transcoding.

To achieve the foregoing objectives, the following technical solutions are used in embodiments of this application.

According to a first aspect, a media file transmission method is provided. The method includes: A transmitter performs Bluetooth capability negotiation with a receiver, to determine that the transmitter and the receiver support an adaptive coding protocol, where the adaptive coding protocol is used by the transmitter to send media files in different codec formats to the receiver via Bluetooth. The transmitter determines at least one codec format that is of a media file and that is supported by the receiver. The transmitter establishes an advanced audio distribution profile A2DP Bluetooth connection to the receiver. The transmitter determines a first codec format of a to-be-sent first media file, and when the at least one codec format supported by the receiver includes the first codec format, the transmitter sends the first media file to the receiver, where media data in the first media file includes a first indication, and the first indication indicates the first codec format.

In this way, on the basis that the transmitter and the receiver support the adaptive coding protocol, the transmitter does not need to negotiate with the receiver to obtain a fixed codec format for transmitting a media file, and the transmitter does not need to perform transcoding based on the fixed codec format. If a codec format of a media file to be sent by the transmitter is within a codec format range supported by the receiver, the transmitter may adaptively send the media files in the plurality of different codec formats to the receiver, and use the media data in the media file to carry the first indication indicating the codec format, and the receiver may adaptively adjust a decoding scheme based on the first indication, so that when the transmitter and the receiver transmit the media file via Bluetooth, the receiver may play the media files in the different codec formats. At the transmitter, power consumption and a transmission delay of the transmitter can be reduced without transcoding. In addition, at the receiver, when the transmitter does not perform sound quality transcoding, sound quality of the receiver is not affected, thereby improving playing effect and user experience of the receiver.

In a possible design, the method further includes: The transmitter determines a second codec format of a to-be-sent second media file, and when the at least one codec format supported by the receiver includes the second codec format, the transmitter sends the second media file to the receiver, where media data in the second media file includes a second indication, and the second indication indicates the second codec format; and the second codec format is different from the first codec format. That is, when the codec format of the second media file currently sent by the transmitter is different from the codec format of the first media file previously sent by the transmitter, if the second codec format of the second media file is supported by the receiver, the transmitter only needs to use the media data in the second media file to carry the indication indicating the second codec format. In this case, the transmitter does not need to perform transcoding, to reduce power consumption and a delay of the transmitter, and does not need to perform sound quality transcoding, to avoid sound quality impairment and improve playing effect and user experience of the receiver.

In a possible design, when the at least one codec format supported by the receiver does not include the first codec format, the transmitter transcodes the first media file in the first codec format to obtain the first media file in a second codec format, where the at least one codec format that is of the media file and that is supported by the receiver includes the second codec format. The transmitter sends the first media file in the second codec format to the receiver, where media data in the first media file includes a second indication, and the second indication indicates the second codec format. That is, if the first codec format of the first media file to be sent by the transmitter is not supported by the receiver, transcoding needs to be performed, so that the receiver smoothly plays the transcoded first media file.

In a possible design, that a transmitter performs Bluetooth capability negotiation with a receiver, to determine that the transmitter and the receiver support an adaptive coding protocol includes: The transmitter establishes a Bluetooth connection to the receiver. The transmitter sends a first request to the receiver, where the first request is used to query whether the receiver supports the adaptive coding protocol. The transmitter receives a first response from the receiver, where the first response includes an indication that the receiver supports the adaptive coding protocol, and further includes the at least one codec format supported by the receiver. The adaptive coding protocol enables the transmitter to directly transmit the media files in the different codec formats to the receiver without transcoding, thereby reducing power consumption of the transmitter and improving sound quality effect of the receiver.

In a possible design, that the transmitter determines at least one codec format that is of a media file and that is supported by the receiver includes: The transmitter determines the at least one codec format that is of the media file and that is supported by the receiver and at least one codec format locally supported by the transmitter. The transmitter determines a codec format set, where each codec format in the codec format set is at least one codec format that is of a media file and that is supported by both the transmitter and the receiver. In this way, for a media file to be sent by the transmitter, if a codec format of the media file is in the set, it indicates that both the transmitter and the receiver support the codec format. In this case, the transmitter does not need to perform transcoding, and sends media data in the media file to the receiver provided that the media data carries an indication indicating a corresponding codec format.

According to a second aspect, a media file transmission method is provided. The method includes: A receiver performs Bluetooth capability negotiation with a transmitter, to determine that the receiver and the transmitter support an adaptive coding protocol, where the adaptive coding protocol is used by the transmitter to send media files in different codec formats to the receiver via Bluetooth. The receiver sends, to the transmitter, at least one codec format supported by the receiver. The receiver establishes an advanced audio distribution profile A2DP Bluetooth connection to the transmitter. The receiver receives a first media file sent by the transmitter, where media data in the first media file includes a first indication, the first indication indicates a first codec format, and the at least one codec format supported by the receiver includes the first codec format.

In this way, on the basis that the transmitter and the receiver support the adaptive coding protocol, the transmitter does not need to negotiate with the receiver to obtain a fixed codec format for transmitting a media file, and the transmitter does not need to perform transcoding based on the fixed codec format. If a codec format of a media file to be sent by the transmitter is within a codec format range supported by the receiver, the transmitter may adaptively send the media files in the plurality of different codec formats to the receiver, and use the media data in the media file to carry the first indication indicating the codec format, and the receiver may adaptively adjust a decoding scheme based on the first indication, so that when the transmitter and the receiver transmit the media file via Bluetooth, the receiver may play the media files in the different codec formats. At the transmitter, power consumption and a transmission delay of the transmitter can be reduced without transcoding. In addition, at the receiver, when the transmitter does not perform sound quality transcoding, sound quality of the receiver is not affected, thereby improving playing effect and user experience of the receiver.

In a possible design, the method further includes: The receiver receives a second media file, where media data in the second media file includes a second indication, and the second indication indicates a second codec format of the second media file; and the second codec format is different from the first codec format, and the at least one codec format supported by the receiver includes the second codec format.

For benefits of the design, refer to the descriptions of the first aspect.

In a possible design, that a receiver performs Bluetooth capability negotiation with a transmitter, to determine that the receiver and the transmitter support an adaptive coding protocol includes: The receiver establishes a Bluetooth connection to the transmitter. The receiver receives a first request sent by the transmitter, where the first request is used to query whether the receiver supports the adaptive coding protocol. The receiver sends a first response to the transmitter, where the first response includes an indication that the receiver supports the adaptive coding protocol, and further includes the at least one codec format supported by the receiver.

For benefits of the design, refer to the descriptions of the first aspect.

According to a third aspect, a transmitter is provided, and includes: a negotiation unit, configured to perform Bluetooth capability negotiation with a receiver, to determine that the transmitter and the receiver support an adaptive coding protocol, where the adaptive coding protocol is used by the transmitter to send media files in different codec formats to the receiver via Bluetooth; a determining unit, configured to determine at least one codec format that is of a media file and that is supported by the receiver; a connection unit, configured to establish an advanced audio distribution profile A2DP Bluetooth connection between the transmitter and the receiver, where the determining unit is further configured to determine a first codec format of a to-be-sent first media file; and a sending unit, configured to: when the at least one codec format supported by the receiver includes the first codec format, send the first media file to the receiver, where media data in the first media file includes a first indication, and the first indication indicates the first codec format.

In a possible design, the determining unit is further configured to determine a second codec format of a to-be-sent second media file; and the sending unit is further configured to: when the at least one codec format supported by the receiver includes the second codec format, send the second media file to the receiver, where media data in the second media file includes a second indication, and the second indication indicates the second codec format; and the second codec format is different from the first codec format.

In a possible design, the transmitter further includes a transcoding unit, configured to: when the at least one codec format supported by the receiver does not include the first codec format, transcode the first media file in the first codec format to obtain the first media file in a second codec format, where the at least one codec format that is of the media file and that is supported by the receiver includes the second codec format; and the sending unit is further configured to send the first media file in the second codec format to the receiver, where media data in the first media file includes a second indication, and the second indication indicates the second codec format.

In a possible design, the negotiation unit is configured to: establish a Bluetooth connection to the receiver; send a first request to the receiver, where the first request is used to query whether the receiver supports the adaptive coding protocol; and receive a first response from the receiver, where the first response includes an indication that the receiver supports the adaptive coding protocol, and further includes the at least one codec format supported by the receiver.

In a possible design, the determining unit is configured to: determine the at least one codec format that is of the media file and that is supported by the receiver and at least one codec format locally supported by the transmitter; and determine a codec format set, where each codec format in the codec format set is at least one codec format that is of a media file and that is supported by both the transmitter and the receiver.

According to a fourth aspect, a receiver is provided, and includes: a negotiation unit, configured to perform Bluetooth capability negotiation with a transmitter, to determine that the receiver and the transmitter support an adaptive coding protocol, where the adaptive coding protocol is used by the transmitter to send media files in different codec formats to the receiver via Bluetooth; a sending unit, configured to send, to the transmitter, at least one codec format supported by the receiver; a connection unit, configured to establish an advanced audio distribution profile A2DP Bluetooth connection to the transmitter; and a receiving unit, configured to receive a first media file sent by the transmitter, where media data in the first media file includes a first indication, the first indication indicates a first codec format, and the at least one codec format supported by the receiver includes the first codec format.

In a possible design, the receiving unit is further configured to receive a second media file, where media data in the second media file includes a second indication, and the second indication indicates a second codec format of the second media file; and the second codec format is different from the first codec format, and the at least one codec format supported by the receiver includes the second codec format.

In a possible design, the negotiation unit is configured to: establish a Bluetooth connection to the transmitter; receive a first request sent by the transmitter, where the first request is used to query whether the receiver supports the adaptive coding protocol; and send a first response to the transmitter, where the first response includes an indication that the receiver supports the adaptive coding protocol, and further includes the at least one codec format supported by the receiver.

According to a fifth aspect, a communication apparatus is provided, and includes at least one processor. The at least one processor is connected to a memory, and the at least one processor is configured to: read and execute a program stored in the memory, so that the apparatus performs the method according to any one of the first aspect or the possible designs of the first aspect, and/or the method according to any one of the second aspect or the possible designs of the second aspect.

According to a sixth aspect, a chip is provided, for example, a Bluetooth chip. The chip is coupled to a memory, and is configured to: read and execute program instructions stored in the memory, to implement the method according to any one of the first aspect or the possible designs of the first aspect, and/or the method according to any one of the second aspect or the possible designs of the second aspect.

According to a seventh aspect, a Bluetooth device is provided. The Bluetooth device includes a memory and a processor. The memory is coupled to the processor. The memory is configured to store computer program code. The computer program code includes computer instructions. The transceiver is configured to: receive and send data. When the processor executes the computer instructions, the Bluetooth device is enabled to perform any media file transmission method according to the first aspect or the corresponding possible designs of the first aspect.

According to an eighth aspect, an embodiment of this application provides a terminal device, including an antenna, one or more processors, and one or more memories. The one or more memories are coupled to the one or more processors. The one or more memories are configured to store computer program code. The computer program code includes computer instructions. When the one or more processors execute the computer instructions, the electronic device is enabled to perform the media file transmission method according to any one of the foregoing aspects or the possible implementations.

According to a ninth aspect, an embodiment of this application provides a computer-readable storage medium, including computer instructions. When the computer instructions are run on an electronic device, the electronic device is enabled to perform the media file transmission method according to any one of the foregoing aspects or the possible implementations.

According to a tenth aspect, an embodiment of this application provides a computer program product. When the computer program product runs on a computer or a processor, the computer or the processor is enabled to perform the media file transmission method according to any one of the foregoing aspects or the possible implementations.

According to an eleventh aspect, an embodiment of this application provides a computer-readable storage medium, including computer instructions. When the computer instructions are run on an electronic device, the electronic device is enabled to perform the media file transmission method according to any one of the foregoing aspects or the possible implementations.

According to a twelfth aspect, an embodiment of this application provides a computer program product. When the computer program product runs on a computer or a processor, the computer or the processor is enabled to perform the media file transmission method according to any one of the foregoing aspects or the possible implementations.

According to a thirteenth aspect, an embodiment of this application provides a system. The system may include a transmitter and a receiver according to any possible implementation of any one of the foregoing aspects. The transmitter and the receiver may perform the media file transmission method according to any one of the foregoing aspects or the possible implementations.

It may be understood that any one of the transmitter, the receiver, the chip, the computer-readable storage medium, the computer program product, or the like provided above may be used in the corresponding method provided above. Therefore, for beneficial effects that can be achieved by the transmitter, the receiver, the chip, the computer-readable storage medium, or the computer program product, refer to beneficial effects in the corresponding method. Details are not described herein again.

These aspects or other aspects in this application are more concise and comprehensible in the following descriptions.

### BRIEF DESCRIPTION OF DRAWINGS

FIG. 1 is a schematic flowchart of transmitting an audio file between a transmitter and a receiver that are of Bluetooth audio according to an embodiment of this application;
FIG. 2 is a diagram of a network architecture according to an embodiment of this application;
FIG. 3 is a diagram of an encapsulation and transmission process of an audio data packet format in an audio file according to an embodiment of this application;
FIG. 4 is a schematic flowchart of a media file transmission method according to an embodiment of this application;
FIG. 5 is a schematic flowchart of a media file transmission method according to an embodiment of this application;
FIG. 6 is a diagram of a structure of an electronic device according to an embodiment of this application;
FIG. 7 is a diagram of a structure of a terminal device according to an embodiment of this application; and
FIG. 8 is a diagram of a structure of an electronic device according to an embodiment of this application.

### DESCRIPTION OF EMBODIMENTS

For ease of understanding, some concepts related to embodiments of this application are described for reference by using examples. Details are as follows:

A2DP: is an audio transmission protocol of Bluetooth, and defines a protocol and a process of distributing mono or stereo high-quality audio content on an asynchronous connectionless link (Asynchronous Connectionless Link, ACL) channel. A2DP may be applied to playing devices such as a Bluetooth headset, a Bluetooth speaker, and a vehicle-mounted speaker. This protocol specifies protocol stack software and a usage method for transmitting high-quality audio data through a Bluetooth asynchronous transmission channel. According to this protocol, a transmitter can transmit high-quality stereo music via Bluetooth. A typical example is that the transmitter streams music content from a stereo music player to a headset or a speaker. The audio data is compressed in a proper format to effectively use limited bandwidth. A2DP focuses on an audio stream, so that a user can distribute high-quality audio content.

Format of support of codecs (Support of Codecs): Mandatory (Mandatory) and optional (Optional) encoders supported in a profile are defined in A2DP, as shown in Table 1.

**Table 1**

| Codec type (codec type) | Support (support) |
|---|---|
| SBC | M |
| MPEG-1,2 Audio | O |
| MPEG-2,4 AAC | O |
| ATRAC family | O |

SBC is a coding scheme that needs to be supported by both the transmitter and the receiver and that is specified in A2DP, and moving picture experts group (Motion Picture Expert Group, MPEG)-1,2 Audio, MPEG-2,4 AAC, and adaptive transform acoustic Transcoding (Adaptive Transform Acoustic Coding, ATRAC) family are optional coding schemes.

Vendor specific A2DP codecs (Vendor Specific A2DP codecs): for example, a codec type that is not listed in Table 1, a codec format allocated via Bluetooth, or a different mandatory or optional codec type used by the transmitter and the receiver. For example, mp3 and opus are not in coding types defined in Table 1, and mp3 and opus may be understood as vendor specific A2DP codecs or vendor specific codec schemes.

A vendor herein may be understood as a vendor of a Bluetooth chip.

Codec specific information elements: Table 2 shows information elements of a specific codec of a vendor specific A2DP codec used in a signaling transmission process between the transmitter and the receiver.

**Table 2**

| |
|---|
| Vendor identifier (vendor ID) |
| Vendor specific codec identifier (Vendor Specific codec ID) |
| Vendor specific value (Vendor Specific Value) |

Media packet format (media packet format): Table 3 shows a format of a media packet transmitted, to the receiver, by the transmitter that establishes a Bluetooth connection, for example, a format of audio data.

**Table 3**

| |
|---|
| Timestamp |
| SSRC |
| CSRC 1 |
| ... |
| CSRC n |
| Media payload |

The timestamp indicates a timestamp of the sent media packet. The synchronization source (Synchronization source, SSRC) indicates a source of the audio data, which is independent of a network address. All packets sent in a same SSRC have a same time sequence and sequence number interval. Therefore, the receiver can group and sort the received packets by using the SSRC. An SSRC may change a data format of audio coding over time. CSRC 1, ..., and CSRC n indicate contributing sources, and each CSRC identifies all contributing sources included in a payload of the audio data. The media payload indicates audio content of the audio data.

The timestamp and the SSRC are mandatory (mandatory) formats in the media packet format, and CSRC 1, ..., and CSRC n are extension (extension) formats in the media packet format. Both the mandatory format and the extension format are formats in a media packet header (media packet header, MP) in the media packet format.

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for the purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

A transmitter of Bluetooth audio usually selects high-quality audio data (a high-quality audio codec format) by comparing an audio codec format of a local audio file of the transmitter with an audio codec format supported by a receiver of the Bluetooth audio, and transmits audio data in an A2DP audio codec format from the transmitter of the Bluetooth audio to the receiver of the Bluetooth audio. When an audio codec format supported by the receiver of the Bluetooth audio includes the audio codec format of the local audio file of the transmitter, the transmitter selects the audio codec format of the local audio file as the A2DP transmission audio codec format, and adds an audio playing module to the transmitter of the Bluetooth audio. In this way, the transmitter of the Bluetooth audio does not need to collect the high-quality audio data via a sound card of an operating system, and does not need to perform audio codec format conversion, and therefore may directly transmit, in the audio codec format of the local audio file, the high-quality audio data to the receiver of the Bluetooth audio through an A2DP link.

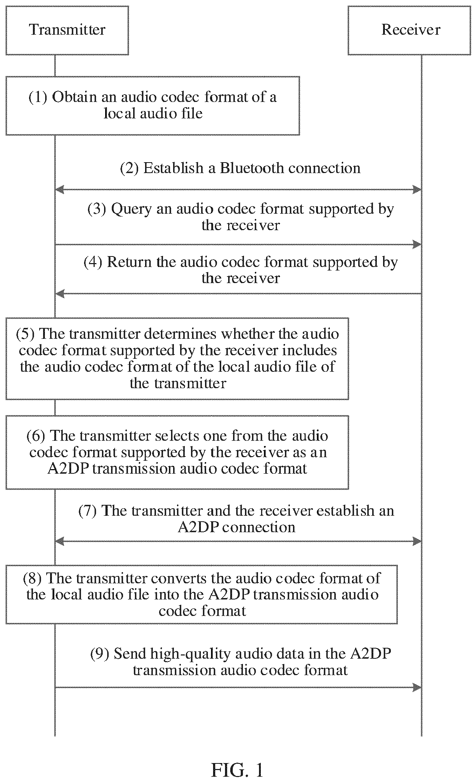

Specifically, FIG. 1 is a schematic flowchart of transmitting an audio file between a transmitter and a receiver that are of Bluetooth audio. The procedure includes the following steps:
(1) The transmitter may first obtain an audio codec format of a local audio file.
(2) The transmitter and the receiver establish a Bluetooth connection.
(3) The transmitter queries an audio codec format supported by the receiver.
(4) The receiver returns the audio codec format supported by the receiver.
(5) The transmitter determines whether the audio codec format supported by the receiver includes the audio codec format of the local audio file of the transmitter.
(6) The transmitter selects one from the audio codec format supported by the receiver as an A2DP transmission audio codec format.
(7) The transmitter and the receiver establish an A2DP connection.
(8) The transmitter converts the audio codec format of the local audio file into the A2DP transmission audio codec format.
(9) The transmitter sends high-quality audio data in the A2DP transmission audio codec format.

It can be learned that once the transmitter and the receiver obtain an audio codec format through negotiation as the A2DP transmission audio codec format, the transmitter needs to transcode all codec formats of to-be-sent audio files to the selected A2DP transmission audio codec format. This requires a decoding and encoding process, and power consumption and a delay of transmitting the audio data by the transmitter are high. In addition, sound quality transcoding may impair sound quality, thereby affecting playing effect and user experience of an audio file at the receiver.

For example, in a current Bluetooth audio file transmission process, negotiation of a Bluetooth audio format is rigid. It is assumed that a Bluetooth audio format of the receiver supports SBC and AAC, and the A2DP transmission audio codec format currently obtained through negotiation is AAC. When the transmitter transmits a next audio file in a codec format mp3, the transmitter needs to transcode a format of the audio file in the codec format mp3 to AAC.

In addition, if the transmitter and the receiver obtain a new audio codec format through re-negotiation as the A2DP transmission audio codec format, long time is consumed, thereby affecting playing experience of a user at the receiver.

In view of this, this application provides a media file transmission method, which may be applied to a scenario of an A2DP transmission audio codec format. A media file may be, for example, an audio file or a video file.

In this application, codec formats of a plurality of media files may be adaptively transmitted by using Bluetooth A2DP, and the media files in the plurality of codec formats are played without transcoding, thereby reducing power consumption and a transmission delay of a transmitter. This can support high-quality audio playing without transcoding, thereby improving audio playing effect and user experience. Specifically, on the basis that the transmitter and a receiver support an adaptive coding protocol, when the transmitter learns of a plurality of codec formats supported by the receiver, the transmitter may not transcode a to-be-sent media file, but uses media data in the media file to carry indication information, to indicate a codec format of the media file. In this way, when receiving the media file, the receiver may correspondingly adjust a decoding scheme based on the indication information, so that media files in different formats can be played at the receiver through a Bluetooth connection.

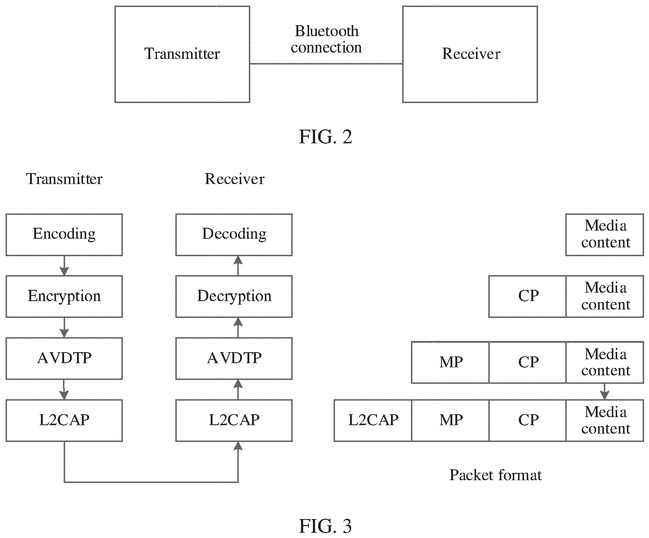

A network architecture to which the media file transmission method in this application is applied may be shown in FIG. 2, and includes a transmitter and a receiver. The transmitter and the receiver may establish a Bluetooth connection. The transmitter may send, to the receiver, a media file transmitted by using A2DP. The media file may be, for example, an audio file or a video file.

The transmitter may be, for example, a terminal device, and is specifically, for example, a mobile phone or a smartwatch.

The receiver may be, for example, a Bluetooth headset, a Bluetooth speaker, or a vehicle-mounted speaker.

Both the transmitter and the receiver are devices that support Bluetooth transmission.

In some embodiments, the transmitter may be understood as a Bluetooth chip that sends a media file, and the receiver may be understood as a Bluetooth chip that receives a media file.

Before the media file transmission method in this application is described, a process of encapsulating and transmitting an audio data packet format in an audio file is first described. As shown in FIG. 3, a transmitter of an audio file needs to first perform encoding (encoding) on to-be-sent audio data to obtain media content (media payload). Then, the transmitter may perform encryption (encryption) on the media content (the encryption process is optional) to obtain a content protection header (content protection header, CP) of the media content. The transmitter may perform audio/video distribution transport protocol (Audio/Video Distribution Transport Protocol, AVDTP)-based encapsulation to obtain a media packet header (media packet header, MP). The transmitter may perform logical link control and adaptation layer protocol (Logical Link Control and Adaptation Layer Protocol, L2CAP)-based encapsulation to obtain encapsulated media data and send the encapsulated media data to the receiver.

Correspondingly, a receiver may decapsulate a media file through L2CAP and AVDTP layers, and then perform decryption (decryption) and decoding on a decapsulated media file (the decryption process is optional), to obtain decoded media data.

AVDTP defines parameter negotiation, establishment, and transmission processes of data stream handles between Bluetooth devices, and signaling entity forms for mutual exchange. The protocol is a basic protocol of an A2DP framework. The L2CAP layer is a multiplexing layer of Bluetooth with low power consumption. This layer defines two basic concepts: L2CAP channel and L2CAP signaling.

This application is equivalent to extending an extension format in an MP in a process of encapsulating a media file, and adding indication information, where the indication information indicates a codec format of media data. For example, the indication information is a vendor special codec ID, and indicates a vendor specific codec identifier.

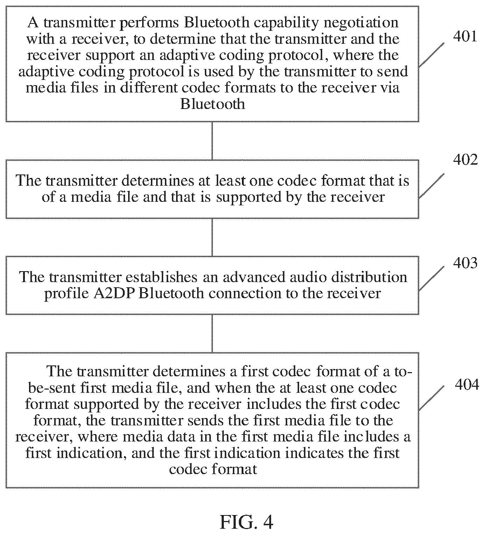

Based on the network architecture, this application provides a media file transmission method. As shown in FIG. 4, the method includes the following procedure.

401. A transmitter performs Bluetooth capability negotiation with a receiver, to determine that the transmitter and the receiver support an adaptive coding protocol, where the adaptive coding protocol is used by the transmitter to send media files in different codec formats to the receiver via Bluetooth.

Correspondingly, the receiver performs Bluetooth capability negotiation with the transmitter, to determine that the receiver and the transmitter support the adaptive coding protocol.

For example, a media file is an audio file. When the transmitter needs to transmit the audio file to the receiver via Bluetooth, if the transmitter sends the audio file to the receiver in different codec formats, the transmitter needs to establish a Bluetooth connection to the receiver, and then determine, through negotiation, whether the transmitter and the receiver support the adaptive coding protocol. In this case, the adaptive coding protocol may be understood as that when the transmitter transmits the audio file to the receiver, the transmitter may send audio files in different codec formats to the receiver provided that a format of a local audio file of the transmitter is within a range of codec formats supported by the receiver. For example, the receiver supports codec formats such as SBC, AAC, and mp3. When a current audio file to be sent by the transmitter is in the codec format SBC, the transmitter may directly send the audio file in the codec format SBC; and when a next audio file to be sent by the transmitter is in the codec format AAC, the transmitter may directly send the audio file in the codec format AAC.

402. The transmitter determines at least one codec format that is of a media file and that is supported by the receiver.

Correspondingly, the receiver sends, to the transmitter, the at least one codec format supported by the receiver.

In this way, when determining a local codec format of the transmitter, the transmitter may obtain an intersection of the local codec format and the codec format supported by the receiver. When a codec format of a to-be-sent media file is in the intersection, the transmitter may directly send the media file to the receiver.

403. The transmitter establishes an advanced audio distribution profile A2DP Bluetooth connection to the receiver.

Correspondingly, the receiver establishes the advanced audio distribution profile A2DP Bluetooth connection to the transmitter.

When the transmitter needs to send a media file to the receiver, the transmitter first establishes the A2DP Bluetooth connection to the receiver, so that the transmitter sends the media file to the receiver by using A2DP.

404. The transmitter determines a first codec format of a to-be-sent first media file, and when the at least one codec format supported by the receiver includes the first codec format, the transmitter sends the first media file to the receiver, where media data in the first media file includes a first indication, and the first indication indicates the first codec format.

Correspondingly, the receiver receives the first media file sent by the transmitter.

When the first codec format of the first media file sent by the transmitter is the codec format supported by the receiver, the transmitter may directly send the first media file to the receiver, and use the first media file to carry the first indication, to indicate that a codec format of the first media file is the first codec format.

In this way, on the basis that the transmitter and the receiver support the adaptive coding protocol, the transmitter does not need to negotiate with the receiver to obtain a fixed codec format for transmitting a media file, and the transmitter does not need to perform transcoding based on the fixed codec format. If a codec format of a media file to be sent by the transmitter is within a codec format range supported by the receiver, the transmitter may adaptively send the media files in the plurality of different codec formats to the receiver, and use the media data in the media file to carry the first indication indicating the codec format, and the receiver may adaptively adjust a decoding scheme based on the first indication, so that when the transmitter and the receiver transmit the media file via Bluetooth, the receiver may play the media files in the different codec formats. At the transmitter, power consumption and a transmission delay of the transmitter can be reduced without transcoding. In addition, at the receiver, when the transmitter does not perform sound quality transcoding, sound quality of the receiver is not affected, thereby improving playing effect and user experience of the receiver.

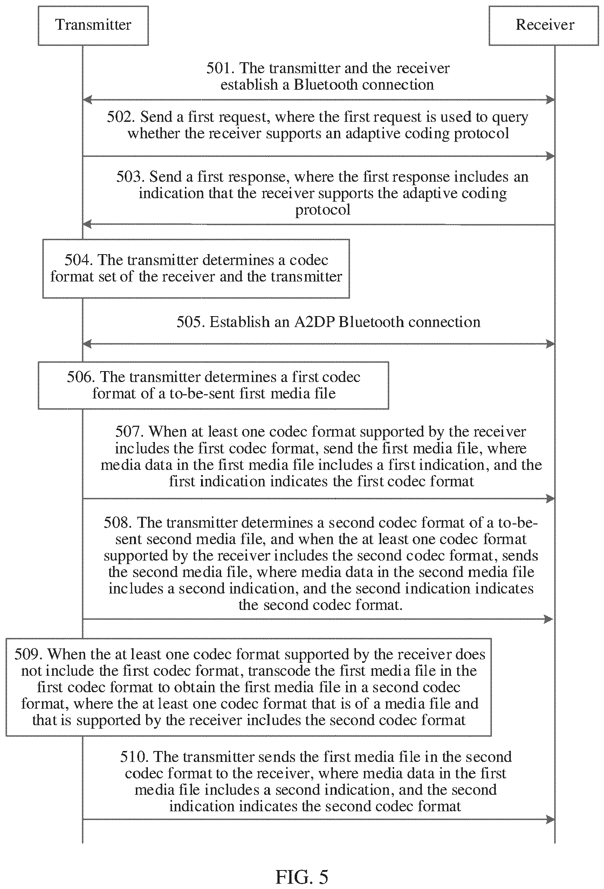

The following further describes the media file transmission method in this application. As shown in FIG. 5, the method includes the following procedure.

501. A transmitter and a receiver establish a Bluetooth connection.

For example, the transmitter is a mobile phone that supports Bluetooth, and the receiver is a Bluetooth headset. In this case, when enabling a Bluetooth function of the mobile phone, a user may control the mobile phone to establish a Bluetooth connection to the Bluetooth headset.

502. The transmitter sends a first request to the receiver, where the first request is used to query whether the receiver supports an adaptive coding protocol, where the adaptive coding protocol is used by the transmitter to send media files in different codec formats to the receiver via Bluetooth.

Correspondingly, the receiver receives the first request sent by the transmitter.

The adaptive coding protocol in this application may be denoted as an ADPC (adaptive codec) protocol. The ADPC protocol may be understood as a virtual codec format that can adapt to a codec format capability. Information about the ADPC protocol may include a plurality of codec format capabilities. When the transmitter and the receiver that support A2DP support the ADPC protocol, a codec format capability supported by the transmitter and the receiver may be negotiated about by using the information about the ADPC protocol. In this case, an ADPC is similar to a container. In this application, an actual audio format may be described in an extension format in an ADPC media packet header (ADPC media packet header, ADPC MP), and frame (frame) data of a media file may still comply with standards of different codec formats of the media file.

503. The receiver sends a first response to the transmitter, where the first response includes an indication that the receiver supports the adaptive coding protocol, and further includes at least one codec format supported by the receiver.

The transmitter receives the first response from the receiver. When the receiver supports the adaptive coding protocol, the transmitter and the receiver may preferentially select the adaptive coding protocol as a default Bluetooth initial format.

In some embodiments, in current A2DP, when the receiver and the transmitter negotiate about a codec format of an audio file, and the receiver returns, to the transmitter, a codec format supported by the receiver, a response fed back by the receiver may carry protocol information shown in Table 4.

**Table 4**

| |
|---|
| Sampling frequency (sampling frequency) |
| Company ID (vendor ID) |
| 0xXXXD or 0xYYYF |

The sampling frequency is a sampling frequency of an audio file supported by the receiver, and the company ID is an identifier of a vendor of the receiver. The company ID may be, for example, 0xXXXD or 0xYYYF, and is used to distinguish between vendors of different Bluetooth chips of the receiver. The Bluetooth chip may be understood as a playing apparatus configured to support playing of an audio file transmitted via Bluetooth.

In this application, in the first response fed back by the receiver, the at least one codec format supported by the receiver may be indicated by using at least one vendor special codec ID. For example, the receiver may feed back the first response to the transmitter according to a rule of the vendor special codec ID shown in Table 5. Certainly, the transmitter stores the rule shown in Table 5, so that the transmitter determines, according to the rule and based on the first response, the at least one codec format supported by the receiver.

**Table 5**

| Position | Vendor special codec ID | Support in SRC | Support in SNK |
|---|---|---|---|
| Octet4; b0 | SBC | M | M |
| Octet4; b1 | MPEG-1,2 Audio (M2A) | O | O |
| Octet4; b2 | MPEG-2,4 AAC (M4A) | O | O |
| Octet4; b3 | ATRAC family | O | O |
| Octet4; b4 | FLAC | O | O |
| Octet4; b5 | opus | O | O |
| Octet4; b6 | Vorbis | O | O |
| Octet4; b7 | Monkey's Audio(.ape) | O | O |
| Octet5; b0 | RFA | - | - |
| Octet5; b1 | RFA | - | - |
| Octet5; b2 | RFA | - | - |
| Octet5; b3 | RFA | - | - |
| Octet5; b4 | RFA | - | - |
| Octet5; b5 | RFA | - | - |
| Octet5; b6 | RFA | - | - |
| Octet5; b7 | | - | - |

The position indicates a bit position in which a codec format or a vendor special codec ID is indicated by using 16 bits in the first response. For example, when a value of a 0^{th} bit (b0) in Octet4 of the first response is 1, it indicates that the receiver supports the codec format SBC, and when a value of a 1^{st} bit (b1) in Octet4 of the first response is 1, it indicates that the receiver supports the codec format MPEG-1,2 Audio. By analogy, the receiver may use a 16-bit bit value to indicate a plurality of vendor special codec IDs, that is, the at least one codec format supported by the receiver. For example, codec formats supported by the receiver include SBC, MPEG-1,2 Audio, MPEG-2,4 AAC, adaptive transform acoustic coding (Adaptive Transform Acoustic Coding, ATRAC) family, free lossless audio codec (Free Lossless Audio Codec, FLAC), opus, Vorbis, and high-quality music converter (Monkey's Audio(.ape)) in Table 5. Certainly, in this application, these codec formats are not limited, and other codec formats may be further included. RFA in Table 5 indicates reservation, that is, may further include another codec format. SRC(Source) may indicate the transmitter, Support in SRC indicates a codec format supported by the transmitter and an optional codec format supported by the transmitter, SNK(sink) may indicate the receiver, and Support in SNK indicates a codec format that needs to be supported by the receiver and an optional codec format supported by the receiver.

In some embodiments, in this application, the current protocol content in Table 4 may be further extended in the ADPC protocol based on the protocol information in Table 4, to indicate a file format obtained when the receiver receives an audio file via Bluetooth. Table 6 shows a vendor specific value (Vendor Specific Value). Parameter values of the vendor specific value that are fed back by different receivers may be different.

**Table 6**

| | | | |
|---|---|---|---|
| Sampling frequency | | | Octet6 |
| | | | Octet7 |
| Channel mode | | | Octet8 |
| VBR | Bit rate | | Octet9 |
| Bit rate | | | Octet10 |
| | | | Octet11 |
| E | EC | | Octet12 |
| MPEG-1,2 Audio Layer | MPEG-2,4 AAC Object Type | | Octet13 |
| AAC Object Type | ATRAC family version | | Octet14 |
| | | | ... |
| | | | Octetn |

The sampling frequency indicates a sampling rate of audio data supported by the receiver. For meanings of other parameters, refer to information descriptions (Descriptions) of information elements (Information Elements) in the vendor specific value in Table 7 and a bit length (Length) that can be occupied by each information element.

**Table 7**

| Information element | Description | Length |
|---|---|---|
| E (extension) | Determine whether a vendor specific value includes extension data. 1 indicates that the vendor specific value includes the extension data, and 0 indicates that the vendor specific value includes no extension data. | 1 bit |
| EC (extension count) | Byte length of extension data: in units of bytes | 7 bits |
| Sampling frequency | Sampling rate: For details, refer to descriptions of the A2DP_v1.3.2 protocol. | 16 bits |
| Channel mode | Channel mode: For details, refer to descriptions of the A2DP_v1.3.2 protocol. | 8 bits |
| VBR (Variable Bit Rate) | Variable bit rate: For details, refer to descriptions of the A2DP_v1.3.2 protocol. | 1 bit |
| Bit rate | Bit rate: For details, refer to descriptions of the A2DP_v1.3.2 protocol. | 23 bits |

504. The transmitter determines the at least one codec format that is of the media file and that is supported by the receiver and at least one codec format locally supported by the transmitter, and determines a codec format set.

Each codec format in the codec format set is at least one codec format that is of a media file and that is supported by both the transmitter and the receiver.

That is, when the transmitter obtains, by using the vendor special codec ID of the ADPC, for example, the rule in Table 5, an audio file capability supported by the receiver, that is, the at least one codec format supported by the receiver, the transmitter may determine the at least one codec format locally supported by the transmitter. Then, the transmitter may obtain an intersection of the at least one codec format supported by the transmitter and the codec format supported by the receiver, that is, the codec format set.

For example, codec formats supported by the receiver that are indicated by the first response fed back by the receiver include SBC, mp3, opus, M4A, and FALC, and codec formats locally supported by the transmitter include SBC, mp3, M4A, and Vorbis. In this case, the codec format set consists of SBC, mp3, and M4A.

505. The transmitter and the receiver establish an A2DP Bluetooth connection.

When the transmitter determines to send a media file, for example, an audio file, through the A2DP Bluetooth connection, the transmitter may first establish the A2DP Bluetooth connection to the receiver.

506. The transmitter determines a first codec format of a to-be-sent first media file, and then, performs step 507 or step 509.

507. When the at least one codec format supported by the receiver includes the first codec format, the transmitter sends the first media file to the receiver, where media data in the first media file includes a first indication, and the first indication indicates the first codec format.

Correspondingly, the receiver receives the first media file.

For example, based on the example in step 504, if the first media file is a first audio file, and the transmitter needs to send the first audio file via Bluetooth, the transmitter may first obtain the first codec format of the first audio file. If the receiver also supports the first codec format, the transmitter may use an extension format in an ADPC MP of the first audio file to carry the first indication. For example, the first indication is represented by a 16-bit vendor special codec ID in Table 5, and the first indication indicates the first codec format.

For example, the first codec format is SBC in the at least one codec format supported by the receiver, and the transmitter may use each audio data packet in the first audio file to carry the 16-bit vendor special codec ID, where a bit value of b0 in the vendor special codec ID is 1, and values of other bits are 0.

508. The transmitter determines a second codec format of a to-be-sent second media file, and when the at least one codec format supported by the receiver includes the second codec format, the transmitter sends the second media file to the receiver, where media data in the second media file includes a second indication, and the second indication indicates the second codec format.

The second codec format is different from the first codec format.

Correspondingly, the receiver receives the second media file.

For example, if the second media file continues to be transmitted to the receiver after the first media file is transmitted in step 507, and the second codec format of the second media file is M4A, because the receiver also supports the codec format M4A, the transmitter may directly send the second media file, and use each piece of media data in the second media file to carry the second indication, where the second indication indicates M4A. In this case, the transmitter may use each media data packet in the second media file to carry a 16-bit vendor special codec ID, where a bit value of b2 in the vendor special codec ID is 1, and values of other bits are 0.

For example, the transmitter transmits an audio file of a song to the receiver. After the transmitter sends a first song in a codec format SBC supported by both the receiver and the transmitter, a codec format of a next song is also a codec format M4A supported by both the receiver and the transmitter. In this case, the transmitter does not need to re-negotiate with the receiver about the codec format, but may directly send an audio file of the next song to the receiver. Each piece of audio data in an audio file of each song carries an indication indicating a codec format of the audio file.

That is, when audio files in different codec formats are played, the transmitter only needs to update vendor special codec ID information in an extension (extension) field of a media packet header in an audio data packet, and the receiver switches the codec format and plays the audio file when detecting that the codec format changes.

509. When the at least one codec format supported by the receiver does not include the first codec format, the transmitter transcodes the first media file in the first codec format to obtain the first media file in a second codec format, where the at least one codec format that is of the media file and that is supported by the receiver includes the second codec format.

Based on the example in step 504, if the first codec format of the first media file to be sent by the transmitter is Vorbis, but the codec format supported by the receiver does not include Vorbis, the transmitter may convert the codec format Vorbis into a codec format supported by the receiver, that is, the second codec format, for example, the second codec format is mp3.

In this way, the transmitter may transmit the first media file in the codec format mp3 to the receiver.

Therefore, even if the format of the first media file to be sent by the transmitter is not supported by the receiver, the transmitter may flexibly transcode the codec format of the to-be-sent media file, and use the transcoded first media file to carry an indication indicating the transcoded codec format.

510. The transmitter sends the first media file in the second codec format to the receiver, where media data in the first media file includes a second indication, and the second indication indicates the second codec format.

Correspondingly, the receiver receives the first media file.

Based on the example in step 509, the second indication, that is, the vendor special codec ID, indicates mp3.

In this way, on the basis that the transmitter and the receiver support the adaptive coding protocol, the transmitter does not need to negotiate with the receiver to obtain a fixed codec format for transmitting a media file, and the transmitter does not need to perform transcoding based on the fixed codec format. If a codec format of a media file to be sent by the transmitter is within a codec format range supported by the receiver, the transmitter may adaptively send the media files in the plurality of different codec formats to the receiver, and use the media data in the media file to carry the first indication indicating the codec format, and the receiver may adaptively adjust a decoding scheme based on the first indication, so that when the transmitter and the receiver transmit the media file via Bluetooth, the receiver may play the media files in the different codec formats. At the transmitter, power consumption and a transmission delay of the transmitter can be reduced without transcoding. In addition, at the receiver, when the transmitter does not perform sound quality transcoding, sound quality of the receiver is not affected, thereby improving playing effect and user experience of the receiver.

It may be understood that, to implement the foregoing functions, the electronic device, for example, the transmitter or the receiver, includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, in embodiments, division into the modules is an example, is merely logical function division, and may be other division in an actual implementation.

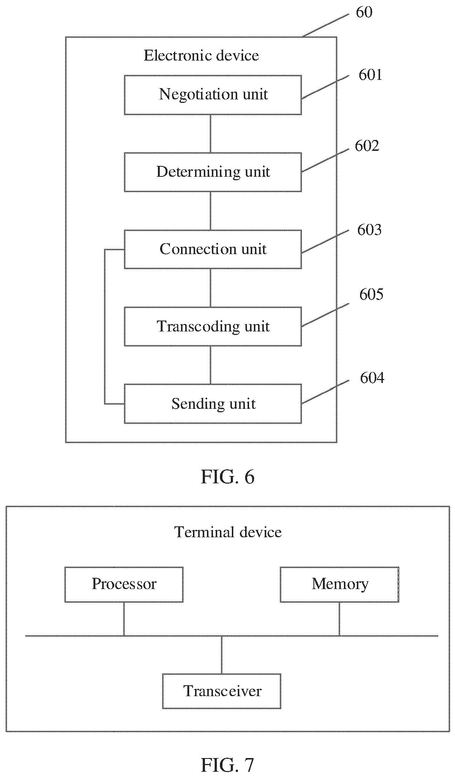

When each functional module is obtained through division for each corresponding function, FIG. 6 is a possible schematic composition diagram of an electronic device 60 in the foregoing embodiment. The electronic device may be the foregoing transmitter. As shown in FIG. 6, the electronic device 60 may include a negotiation unit 601, a determining unit 602, a connection unit 603, a sending unit 604, and a transcoding unit 605.

The negotiation unit 601 may be configured to support the electronic device 60 in performing step 401 and the like, and/or another process of the technology described in this specification.

The determining unit 602 may be configured to support the electronic device 60 in performing step 402, step 504, step 506, and the like, and/or another process of the technology described in this specification.

The connection unit 603 may be configured to support the electronic device 60 in performing step 403, step 501, step 505, and the like, and/or another process of the technology described in this specification.

The sending unit 604 may be configured to support the electronic device 60 in performing step 404, step 502, step 507, step 508, step 509, step 510, and the like, and/or another process of the technology described in this specification.

It should be noted that all related content of the steps in the foregoing method embodiments may be cited in function descriptions of corresponding functional modules. Details are not described herein again.

The electronic device 60 provided in this embodiment is configured to perform the foregoing media file transmission method, and therefore can achieve a same effect as the foregoing implementation method.

When an integrated unit is used, the electronic device 60 may include a processing module, a storage module, and a communication module. The processing module may be configured to: control and manage an action of the electronic device 60, for example, may be configured to support the electronic device 60 in performing the steps performed by the negotiation unit 601, the determining unit 602, and the transcoding unit 605. The storage module may be configured to support the electronic device 60 in storing program code, data, and the like. The communication module may be configured to support the electronic device 60 in communicating with another device, for example, communicating with a Bluetooth device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor, the storage module is a memory, and the communication module is a transceiver, the electronic device 60 in this embodiment may be a terminal device having a structure shown in FIG. 7.

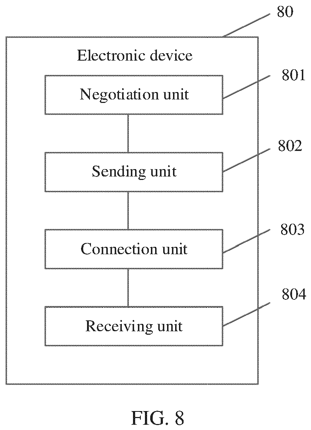

When each functional module is obtained through division for each corresponding function, FIG. 8 is a possible schematic composition diagram of an electronic device 80 in the foregoing embodiment. The electronic device may be the foregoing receiver. As shown in FIG. 8, the electronic device 80 may include a negotiation unit 801, a sending unit 802, a connection unit 803, and a receiving unit 804.

The negotiation unit 801 may be configured to support the electronic device 80 in performing step 401 and the like, and/or another process of the technology described in this specification.

The sending unit 802 may be configured to support the electronic device 80 in performing a corresponding process of step 402 and the like, and/or another process of the technology described in this specification.

The connection unit 803 may be configured to support the electronic device 80 in performing step 403, step 501, step 505, and the like, and/or another process of the technology described in this specification.

The receiving unit 804 may be configured to support the electronic device 80 in performing a corresponding process of step 402, a corresponding process of step 404, a corresponding process of step 502, a corresponding process of step 503, a corresponding process of step 507, a corresponding process of step 508, a corresponding process of step 510, and the like, and/or another process of the technology described in this specification.

It should be noted that all related content of the steps in the foregoing method embodiments may be cited in function descriptions of corresponding functional modules. Details are not described herein again.

The electronic device 80 provided in this embodiment is configured to perform the foregoing media file transmission method, and therefore can achieve a same effect as the foregoing implementation method.

When an integrated unit is used, the electronic device 80 may include a processing module, a storage module, and a communication module. The processing module may be configured to: control and manage an action of the electronic device 80, for example, may be configured to support the electronic device 80 in performing the steps performed by the negotiation unit 801. The storage module may be configured to support the electronic device 60 in storing program code, data, and the like. The communication module may be configured to support the electronic device 80 in communicating with another device, for example, communicating with a Bluetooth device, and may be configured to support the electronic device 80 in performing the processes of the sending unit 802, the connection unit 803, and the receiving unit 804.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor DSP and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor, the storage module is a memory, and the communication module is a transceiver, the electronic device 80 in this embodiment may be a terminal device having a structure shown in FIG. 7.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the media file transmission method in the foregoing embodiments.

An embodiment of this application further provides a computer storage medium. The computer storage medium stores computer instructions. When the computer instructions are run on an electronic device, the electronic device is enabled to perform the foregoing related method steps to implement the media file transmission method in the foregoing embodiments.

An embodiment of this application further provides a computer program product. When the computer program product runs on a computer, the computer is enabled to perform the foregoing related steps, to implement the media file transmission method performed by the electronic device in the foregoing embodiments.

In addition, an embodiment of this application further provides an apparatus. The apparatus may be specifically a chip, a Bluetooth chip, a component, or a module. The apparatus may include a processor and a memory that are connected to each other. The memory is configured to store computer-executable instructions. When the apparatus runs, the processor may execute the computer-executable instructions stored in the memory, so that the chip performs the media file transmission method performed by the electronic device in the foregoing method embodiments.

The electronic device, the computer storage medium, the computer program product, or the chip provided in embodiments is configured to perform the corresponding method provided above. Therefore, for beneficial effects that can be achieved by the electronic device, the computer storage medium, the computer program product, or the chip, refer to the beneficial effects of the corresponding method provided above. Details are not described herein again.

Another embodiment of this application provides a system. The system may include the foregoing transmitter and the foregoing receiver, to implement the foregoing media file transmission method.

Based on the descriptions of the implementations, a person skilled in the art may understand that for the purpose of convenient and brief descriptions, division into the functional modules is merely used as an example for description. In an actual application, the functions can be allocated to different functional modules for implementation based on a requirement. In other words, an inner structure of an apparatus is divided into different functional modules, to implement all or some of the foregoing described functions.

In the several embodiments provided in this application, it should be understood that the disclosed apparatus and method may be implemented in other manners. For example, the described apparatus embodiment is merely an example. For example, division into the modules or units is merely logical function division, and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, and may be located in one place, or may be distributed on a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A media file transmission method, wherein the method comprises:
performing, by a transmitter, Bluetooth capability negotiation with a receiver, to determine that the transmitter and the receiver support an adaptive coding protocol, wherein the adaptive coding protocol is used by the transmitter to send media files in different codec formats to the receiver via Bluetooth;
determining, by the transmitter, at least one codec format that is of a media file and that is supported by the receiver;
establishing, by the transmitter, an advanced audio distribution profile A2DP Bluetooth connection to the receiver; and
determining, by the transmitter, a first codec format of a to-be-sent first media file, and when the at least one codec format supported by the receiver comprises the first codec format, sending, by the transmitter, the first media file to the receiver, wherein media data in the first media file comprises a first indication, and the first indication indicates the first codec format.

2. The method according to claim 1, wherein the method further comprises:
determining, by the transmitter, a second codec format of a to-be-sent second media file, and when the at least one codec format supported by the receiver comprises the second codec format, sending, by the transmitter, the second media file to the receiver, wherein media data in the second media file comprises a second indication, and the second indication indicates the second codec format, wherein
the second codec format is different from the first codec format.

3. The method according to claim 1 or 2, wherein
when the at least one codec format supported by the receiver does not comprise the first codec format, transcoding, by the transmitter, the first media file in the first codec format to obtain the first media file in a second codec format, wherein the at least one codec format that is of the media file and that is supported by the receiver comprises the second codec format; and
sending, by the transmitter, the first media file in the second codec format to the receiver, wherein media data in the first media file comprises a second indication, and the second indication indicates the second codec format.

4. The method according to any one of claims 1 to 3, wherein the performing, by a transmitter, Bluetooth capability negotiation with a receiver, to determine that the transmitter and the receiver support an adaptive coding protocol comprises:
establishing, by the transmitter, a Bluetooth connection to the receiver;
sending, by the transmitter, a first request to the receiver, wherein the first request is used to query whether the receiver supports the adaptive coding protocol; and
receiving, by the transmitter, a first response from the receiver, wherein the first response comprises an indication that the receiver supports the adaptive coding protocol, and further comprises the at least one codec format supported by the receiver.

5. The method according to claim 4, wherein the determining, by the transmitter, at least one codec format that is of a media file and that is supported by the receiver comprises:
determining, by the transmitter, the at least one codec format that is of the media file and that is supported by the receiver and at least one codec format locally supported by the transmitter; and
determining, by the transmitter, a codec format set, wherein each codec format in the codec format set is at least one codec format that is of a media file and that is supported by both the transmitter and the receiver.

6. A media file transmission method, wherein the method comprises:
performing, by a receiver, Bluetooth capability negotiation with a transmitter, to determine that the receiver and the transmitter support an adaptive coding protocol, wherein the adaptive coding protocol is used by the transmitter to send media files in different codec formats to the receiver via Bluetooth;
sending, by the receiver to the transmitter, at least one codec format supported by the receiver;
establishing, by the receiver, an advanced audio distribution profile A2DP Bluetooth connection to the transmitter; and
receiving, by the receiver, a first media file sent by the transmitter, wherein media data in the first media file comprises a first indication, the first indication indicates a first codec format, and the at least one codec format supported by the receiver comprises the first codec format.

7. The method according to claim 6, wherein the method further comprises:
receiving, by the receiver, a second media file, wherein media data in the second media file comprises a second indication, and the second indication indicates a second codec format of the second media file, wherein
the second codec format is different from the first codec format, and the at least one codec format supported by the receiver comprises the second codec format.

8. The method according to claim 6 or 7, wherein the performing, by a receiver, Bluetooth capability negotiation with a transmitter, to determine that the receiver and the transmitter support an adaptive coding protocol comprises:
establishing, by the receiver, a Bluetooth connection to the transmitter;
receiving, by the receiver, a first request sent by the transmitter, wherein the first request is used to query whether the receiver supports the adaptive coding protocol; and
sending, by the receiver, a first response to the transmitter, wherein the first response comprises an indication that the receiver supports the adaptive coding protocol, and further comprises the at least one codec format supported by the receiver.

9. A transmitter, comprising:
a negotiation unit, configured to perform Bluetooth capability negotiation with a receiver, to determine that the transmitter and the receiver support an adaptive coding protocol, wherein the adaptive coding protocol is used by the transmitter to send media files in different codec formats to the receiver via Bluetooth;
a determining unit, configured to determine at least one codec format that is of a media file and that is supported by the receiver;
a connection unit, configured to establish an advanced audio distribution profile A2DP Bluetooth connection between the transmitter and the receiver, wherein
the determining unit is further configured to determine a first codec format of a to-be-sent first media file; and
a sending unit, configured to: when the at least one codec format supported by the receiver comprises the first codec format, send the first media file to the receiver, wherein media data in the first media file comprises a first indication, and the first indication indicates the first codec format.

10. The transmitter according to claim 9, wherein
the determining unit is further configured to determine a second codec format of a to-be-sent second media file; and
the sending unit is further configured to: when the at least one codec format supported by the receiver comprises the second codec format, send the second media file to the receiver, wherein media data in the second media file comprises a second indication, and the second indication indicates the second codec format, wherein
the second codec format is different from the first codec format.

11. The transmitter according to claim 9 or 10, further comprising a transcoding unit, configured to:
when the at least one codec format supported by the receiver does not comprise the first codec format, transcode the first media file in the first codec format to obtain the first media file in a second codec format, wherein the at least one codec format that is of the media file and that is supported by the receiver comprises the second codec format; and
the sending unit is further configured to send the first media file in the second codec format to the receiver, wherein media data in the first media file comprises a second indication, and the second indication indicates the second codec format.

12. The transmitter according to any one of claims 9 to 11, wherein the negotiation unit is configured to:
establish a Bluetooth connection to the receiver;
send a first request to the receiver, wherein the first request is used to query whether the receiver supports the adaptive coding protocol; and
receive a first response from the receiver, wherein the first response comprises an indication that the receiver supports the adaptive coding protocol, and further comprises the at least one codec format supported by the receiver.

13. The transmitter according to claim 12, wherein the determining unit is configured to:
determine the at least one codec format that is of the media file and that is supported by the receiver and at least one codec format locally supported by the transmitter; and
determine a codec format set, wherein each codec format in the codec format set is at least one codec format that is of a media file and that is supported by both the transmitter and the receiver.

14. A receiver, comprising:
a negotiation unit, configured to perform Bluetooth capability negotiation with a transmitter, to determine that the receiver and the transmitter support an adaptive coding protocol, wherein the adaptive coding protocol is used by the transmitter to send media files in different codec formats to the receiver via Bluetooth;
a sending unit, configured to send, to the transmitter, at least one codec format supported by the receiver;
a connection unit, configured to establish an advanced audio distribution profile A2DP Bluetooth connection to the transmitter; and
a receiving unit, configured to receive a first media file sent by the transmitter, wherein media data in the first media file comprises a first indication, the first indication indicates a first codec format, and the at least one codec format supported by the receiver comprises the first codec format.

15. The receiver according to claim 14, wherein the receiving unit is further configured to:
receive, by the receiver, a second media file, wherein media data in the second media file comprises a second indication, and the second indication indicates a second codec format of the second media file, wherein
the second codec format is different from the first codec format, and the at least one codec format supported by the receiver comprises the second codec format.

16. The receiver according to claim 14 or 15, wherein the negotiation unit is configured to:
establish a Bluetooth connection to the transmitter;
receive a first request sent by the transmitter, wherein the first request is used to query whether the receiver supports the adaptive coding protocol; and
send a first response to the transmitter, wherein the first response comprises an indication that the receiver supports the adaptive coding protocol, and further comprises the at least one codec format supported by the receiver.

17. A computer-readable storage medium, comprising computer instructions, wherein when the computer instructions are run on an electronic device, the electronic device is enabled to perform the method according to any one of claims 1 to 5.

18. A computer-readable storage medium, comprising computer instructions, wherein when the computer instructions are run on an electronic device, the electronic device is enabled to perform the method according to any one of claims 6 to 8.
